(19) Europäisches Patentamt
European Patent Office
Office européen des brevets

(11) EP 4 303 267 A1

(12) EUROPEAN PATENT APPLICATION
published in accordance with Art. 153(4) EPC

(43) Date of publication:
**10.01.2024 Bulletin 2024/02**

(21) Application number: **22908818.2**

(22) Date of filing: **22.12.2022**

(51) International Patent Classification (IPC):
***C08L 67/02*** (2006.01) ***C08L 51/04*** (2006.01)
***C08K 5/29*** (2006.01) ***B29B 11/10*** (2006.01)
***C08K 3/32*** (2006.01) ***C08K 5/521*** (2006.01)
***C08L 51/00*** (2006.01) ***C08L 9/02*** (2006.01)

(86) International application number:
**PCT/KR2022/021067**

(87) International publication number:
**WO 2023/229131 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.05.2022 KR 20220062787**

(71) Applicant: **LG CHEM, LTD.**
**Yeongdeungpo-gu,**
**Seoul 07336 (KR)**

(72) Inventors:
- **KIM, Kyuyoung**
  **Daejeon 34122 (KR)**
- **KO, Gun**
  **Daejeon 34122 (KR)**
- **CHOI, Sungmoon**
  **Daejeon 34122 (KR)**
- **SIM, Soojin**
  **Daejeon 34122 (KR)**
- **PARK, Ho Joon**
  **Daejeon 34122 (KR)**
- **SON, Sun Mo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) THERMOPLASTIC POLYESTER ELASTOMER COMPOSITION, PREPARATION METHOD THEREFOR AND MOLDED ARTICLE COMPRISING SAME

(57) The present invention relates to a thermoplastic polyester elastomer composition, a method of preparing the same, and a molded article including the same. More particularly, the present invention relates to a thermoplastic polyester elastomer composition including 100 parts by weight of a thermoplastic polyester elastomer (A); 0.5 to 2.5 parts by weight of a glycidyl group-modified olefin-based rubber polymer (B) containing 10 to 17 % by weight of glycidyl (meth)acrylate; and 0.67 to 1.45 parts by weight of a carbodiimide-based compound (C), a method of preparing the thermoplastic polyester elastomer composition, and a molded article including the thermoplastic polyester elastomer composition.

According to the present invention, the present invention has an effect of providing a thermoplastic polyester elastomer composition having excellent fluidity, hardness, tensile strength, tensile elongation, heat aging resistance, and grease resistance and satisfying weight reduction, miniaturization, and aesthetics required in the automotive and electrical/electronic fields, a method of preparing the thermoplastic polyester elastomer composition, and a molded article including the thermoplastic polyester elastomer composition.

EP 4 303 267 A1

## Description

[Technical Field]

[Cross-Reference to Related Application]

This application claims priority to Korean Patent Application No. 10-2022-0062787, filed on May 23, 2022, in the Korean Intellectual Property Office, the disclosure of which is incorporated herein by reference.

The present invention relates to a thermoplastic polyester elastomer composition, a method of preparing the same, and a molded article including the same. More particularly, the present invention relates to a polyester elastomer composition having excellent fluidity, hardness, tensile strength, tensile elongation, heat aging resistance, and grease resistance and satisfying weight reduction, miniaturization, and aesthetics required in the automotive and electrical/electronic fields, a method of preparing the polyester elastomer composition, and a molded article including the polyester elastomer composition.

[Background Art]

Conventional thermoplastic polyester elastomers (hereinafter referred to as "TPEEs") have excellent heat resistance, chemical resistance, dimensional stability, and flexibility, and have been used in manufacture of electric, electronic, and automobile parts and various precision parts.

Recent technological trends in electric, electronic, and automobile fields can be largely summarized as weight reduction and miniaturization. In the automobile field, in accordance with the trend of miniaturization, weight reduction and high performance/high efficiency are being pursued by reducing the size of an engine and installing a turbo. In addition, as aesthetic demands increase, mechanical parts are covered with an engine cover or an undercover. With this structure, heat dissipation is limited, causing deformation of TPEE materials.

In general, even when a TPEE contains a chain extender, heat aging resistance-related tensile strength retention rate and heat aging resistance-related tensile elongation retention rate measured before and after aging at 140 °C for 336 hours are low. When the heat aging resistance of a TPEE applied to automobiles and electric/electronic products is low, the exterior of the product may be deformed or damaged, which may cause a major accident.

In addition, since grease is used for smooth operation of parts in the electric, electronic, and automobile fields, when a TPEE has poor grease resistance, the parts may be damaged and fail to perform the function thereof.

Therefore, there is a need to develop a thermoplastic polyester elastomer composition having excellent heat aging resistance and grease resistance.

[Related Art Documents]

[Patent Documents]

KR 2009-0062785 A

[Disclosure]

[Technical Problem]

Therefore, the present invention has been made in view of the above problems, and it is one object of the present invention to provide a polyester elastomer composition having excellent fluidity, hardness, tensile strength, tensile elongation, heat aging resistance, and grease resistance and satisfying weight reduction, miniaturization, and aesthetics required in the automotive and electrical/electronic fields.

It is another object of the present invention to provide a method of preparing the thermoplastic polyester elastomer composition.

It is yet another object of the present invention to provide a molded article manufactured using the thermoplastic polyester elastomer composition.

The above and other objects can be accomplished by the present invention described below.

[Technical Solution]

In accordance with one aspect of the present invention, provided is a thermoplastic polyester elastomer composition including 100 parts by weight of a thermoplastic polyester elastomer (A); 0.5 to 2.5 parts by weight of a glycidyl

group-modified olefin-based rubber polymer (B) containing 10 to 17 % by weight of glycidyl (meth)acrylate; and 0.67 to 1.45 parts by weight of a carbodiimide-based compound (C).

When tensile strength and tensile elongation are measured according to ISO 527-1/-2 using specimens (thickness: 2 mm) before and after aging at 140 °C for 336 hours, the thermoplastic polyester elastomer composition may preferably have a heat aging resistance-related tensile strength retention rate of 87 % or more as calculated by Equation 1 below and a heat aging resistance-related tensile elongation retention rate of 74 % or more as calculated by Equation 2 below:

[Equation 1]

$$\text{Heat aging resistance-related tensile strength retention rate (\%)} = [\text{Tensile strength after aging}/\text{Tensile strength before aging}] \times 100$$

[Equation 2]

$$\text{Heat aging resistance-related tensile elongation retention rate (\%)} = [\text{Tensile elongation after aging}/\text{Tensile elongation before aging}] \times 100$$

When tensile strength and tensile elongation are measured according to ISO 527-1/-2 using specimens (thickness: 2mm) before and after immersion in grease (CASMOLY VX-712, Cals Co.) at 140 °C for 336 hours, the thermoplastic polyester elastomer composition may preferably have a grease resistance-related tensile strength retention rate of 55 % or more as calculated by Equation 3 below and a grease resistance-related tensile elongation retention rate of 25 % or more as calculated by Equation 4 below:

[Equation 3]

$$\text{Grease resistance-related tensile strength retention rate (\%)} = [\text{Tensile strength after immersion in grease}/\text{Tensile strength before immersion in grease}] \times 100$$

[Equation 4]

$$\text{Grease resistance-related tensile elongation retention rate (\%)} = [\text{Tensile elongation after immersion in grease}/\text{Tensile elongation before immersion in grease}] \times 100$$

The glycidyl group-modified olefin-based rubber polymer (B) may be preferably obtained by grafting glycidyl (meth)acrylate onto a polyolefin-based rubber copolymer.

The carbodiimide-based compound (C) may be an aromatic carbodiimide compound, an aliphatic carbodiimide compound, or a mixture thereof.

The thermoplastic polyester elastomer (A) may preferably have a melt flow rate of 0.5 to 10 g/10 min as measured at 230 °C under a load of 2.16 kg according to ASTM D1238.

The thermoplastic polyester elastomer (A) may be preferably an elastomer including an aromatic dicarboxylic acid or an ester derivative thereof; an aliphatic diol; and a polyalkylene oxide.

The aromatic dicarboxylic acid may preferably include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

The aliphatic diol may preferably include one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.

The polyalkylene oxide may preferably include one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.

The thermoplastic polyester elastomer composition may preferably include a heat stabilizer, a lubricant, or a mixture thereof.

In accordance with another aspect of the present invention, provided is a method of preparing a thermoplastic polyester elastomer composition, the method including kneading and extruding 100 parts by weight of a thermoplastic polyester elastomer (A), 0.5 to 2.5 parts by weight of a glycidyl group-modified olefin-based rubber polymer (B) containing 10 to 17 % by weight of glycidyl (meth)acrylate, and 0.67 to 1.45 parts by weight of a carbodiimide-based compound (C) at 170 to 300 °C and 100 to 400 rpm.

In accordance with yet another aspect of the present invention, provided is a molded article including the thermoplastic polyester elastomer composition.

The molded article may be preferably an automotive part or an electric/electronic part.

[Advantageous Effects]

According to the present invention, the present invention has an effect of providing a polyester elastomer composition having excellent fluidity, hardness, tensile strength, tensile elongation, heat aging resistance, and grease resistance and satisfying weight reduction, miniaturization, and aesthetics required in the automotive and electrical/electronic fields, a method of preparing the polyester elastomer composition, and a molded article including the polyester elastomer composition.

[Best Mode]

Hereinafter, a thermoplastic polyester elastomer composition, a method of preparing the same, and a molded article including the same according to the present invention will be described in detail.

The present inventors confirmed that, when a thermoplastic polyester elastomer, a glycidyl group-modified olefin-based rubber polymer including a predetermined amount of glycidyl (meth)acrylate, and a carbodiimide-based compound were included in a predetermined content ratio, hardness and mechanical properties were excellent, and heat aging resistance and grease resistance were greatly improved. Based on these results, the present inventors conducted further studies to complete the present invention.

The thermoplastic polyester elastomer composition of the present invention will be described in detail as follows.

The thermoplastic polyester elastomer composition of the present invention includes 100 parts by weight of a thermoplastic polyester elastomer (A); 0.5 to 2.5 parts by weight of a glycidyl group-modified olefin-based rubber polymer (B) containing 10 to 17 % by weight of glycidyl (meth)acrylate; and 0.67 to 1.45 parts by weight of a carbodiimide-based compound (C). In this case, fluidity, hardness, tensile strength, tensile elongation, heat aging resistance, and grease resistance may be excellent, and weight reduction, miniaturization, and aesthetics required in the automotive and electrical/electronic fields may be satisfied.

Hereinafter, each component of the thermoplastic polyester elastomer composition of the present invention is described in detail.

## A) Thermoplastic polyester elastomer

For example, the thermoplastic polyester elastomer (A) may be an elastomer including an aromatic dicarboxylic acid or an ester derivative thereof; an aliphatic diol; and a polyalkylene oxide. In this case, flexibility, mechanical strength, and heat resistance may be increased, and physical property balance may be excellent.

A crystalline hard segment may be formed from the aromatic dicarboxylic acid or the ester derivative thereof and the aliphatic diol, and a soft segment may be formed from the polyalkylene oxide. For example, the crystalline hard segment and the soft segment may be randomly arranged.

For example, the aromatic dicarboxylic acid may include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid. Preferably, the aromatic dicarboxylic acid may be terephthalic acid, isophthalic acid, or a mixture thereof.

For example, the ester derivative of the aromatic dicarboxylic acid may include one or more selected from the group consisting of dimethyl terephthalate, dimethyl isophthalate, 2,6-dimethyl naphthalene dicarboxylate, dimethyl 1,5-naphthalene dicarboxylate, and dimethyl 1,4-cyclohexane dicarboxylate. Preferably, the ester derivative of the aromatic dicarboxylic acid may be dimethyl terephthalate, dimethyl isophthalate, or a mixture thereof.

Based on a total weight of the thermoplastic polyester elastomer, the aromatic dicarboxylic acid or the ester derivative thereof may be included in an amount of 25 to 70 % by weight, preferably 30 to 65 % by weight, more preferably 35 to 60 % by weight. Within this range, reaction may be easily performed due to excellent reaction balance.

For example, the aliphatic diol may have a number average molecular weight of 300 g/mol or less, preferably 60 to 300 g/mol.

In the present disclosure, unless otherwise defined, number average molecular weight may be measured using tetrahydrofuran (THF) as an eluate through gel permeation chromatography (GPC, Waters Breeze). In this case, number average molecular weight is obtained as a relative value to a polystyrene (PS) standard sample. Specific measurement conditions are as follows: solvent: THF, column temperature: 40 °C, flow rate: 0.3 ml/min, sample concentration: 20 mg/ml, injection amount: 5 μl, column model: 1×PLgel 10 μm MiniMix-B (250×4.6 mm) + 1×PLgel 10 μm MiniMix-B (250×4.6 mm) + 1×PLgel 10 μm MiniMix-B Guard (50×4.6 mm), equipment name: Agilent 1200 series system, refractive index detector: Agilent G1362 RID, RI temperature: 35 °C, data processing: Agilent ChemStation S/W, and test method (Mn, Mw and PDI) : OECD TG 118.

The aliphatic diol may include preferably one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol, more preferably 1,4-butanediol.

For example, based on a total weight of the thermoplastic polyester elastomer, the aliphatic diol may be included in an amount of 15 to 45 % by weight, preferably 20 to 40 % by weight, more preferably 25 to 40 % by weight. Within this range, reaction may be performed smoothly, and physical property balance between flexibility and mechanical strength may be excellent.

The polyalkylene oxide is an aliphatic polyester as a soft segment. For example, the polyalkylene oxide may include one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran, preferably polytetramethylene glycol.

For example, based on a total weight of the thermoplastic polyester elastomer, the polyalkylene oxide may be included in an amount of 5 to 50 % by weight, preferably 10 to 45 % by weight, more preferably 15 to 40 % by weight. Within this range, flexibility, mechanical strength, and heat resistance may be excellent, and physical property balance may be excellent.

For example, the polyalkylene oxide may have a number average molecular weight of 600 to 3,000 g/mol, preferably 1,000 to 2,000 g/mol. Within this range, polymerization may be performed stably, and a thermoplastic polyester elastomer having excellent physical property balance may be obtained.

The polyalkylene oxide may be preferably a polypropylene glycol having terminal groups capped with ethylene oxide. In this case, polymerization reactivity may be excellent.

The thermoplastic polyester elastomer may preferably include a branching agent. In this case, the melt viscosity and melt strength of the elastomer may be increased.

For example, the branching agent may include one or more selected from the group consisting of glycerol, pentaerythritol, trimellitic anhydride, trimellitic acid, trimethylol propane, and neopentyl glycol, preferably trimellitic anhydride.

For example, based on 100 % by weight in total of the thermoplastic polyester elastomer, the branching agent may be included in an amount of 0.05 to 0.1 % by weight, preferably 0.05 to 0.09 % by weight, more preferably 0.06 to 0.09 % by weight. Within this range, by increasing melt viscosity, the melt viscosity of the elastomer may be controlled, and as a result, the intrinsic viscosity thereof during melt polymerization may be easily controlled.

For example, the thermoplastic polyester elastomer may be prepared by melt polymerization of an aromatic dicarboxylic acid or an ester derivative thereof, an aliphatic diol, and a polyalkylene oxide. In this case, physical property balance between flexibility, mechanical strength, and heat resistance may be excellent, and moldability may be further improved.

Preferably, the thermoplastic polyester elastomer may be prepared by solid-state polymerization of the resin prepared by melt polymerization. In this case, physical property balance between flexibility, mechanical strength, and heat resistance may be excellent, and moldability may be further improved.

Preferably, when the thermoplastic polyester elastomer is prepared, the aromatic dicarboxylic acid, the aliphatic diol, and the polyalkylene oxide are subjected to transesterification at 140 to 215 °C for 110 to 130 minutes under a titanium butoxide (TBT) catalyst to obtain a bis(4-hydroxy) butyl terephthalate (BHBT) oligomer, the TBT catalyst is added again, and then melt polymerization is performed at 215 to 245 °C for 110 to 130 minutes with stepwise pressure reduction from 760 torr to 0.3 torr.

The melt polymerization may be performed until melt flow rate is 20 g/10 min. At this time, the melt flow rate is measured at 230 °C under a load of 2.16 kg according to ASTM D1238. After completion of the reaction, the reactant may be discharged from the reactor under nitrogen pressure, and pelletization may be performed through pelletizing of a strand.

Then, the pellets may be subjected to solid-state polymerization in a solid-state polymerization reactor or a rotatable vacuum dryer at 140 to 200 °C for 10 to 24 hours under an inert atmosphere such as nitrogen.

To achieve high viscosity, the solid-state polymerization may be performed until melt flow rate is 10 g/10 min or less, preferably 0.5 to 10 g/10 min, more preferably 1 to 10 g/10 min, still more preferably 3 to 8 g/10 min. At this time, the melt flow rate is measured at 230 °C under a load of 2.16 kg according to ASTM D1238.

The degree of vacuum applied during the solid-state polymerization may follow the degree of vacuum generally applied in the art to which the present invention pertains, and the present invention is not particularly limited thereto.

The solid-state polymerization reactor may be a vessel vacuum dryer connected to a rotatable high vacuum pump, and the inert atmosphere may be a nitrogen atmosphere.

In the present disclosure, the content of a monomer in a polymer may mean the weight (wt%) of the monomer added during preparation of the polymer or the weight (wt%) of a unit derived from the monomer.

The thermoplastic polyester elastomer (A) may have a melt flow rate of 0.5 to 10 g/10 min, preferably 1 to 10 g/10 min, more preferably 3 to 8 g/10 min as measured at 230 °C under a load of 2.16 kg according to ASTM D1238. Within this range, moldability may be excellent.

For example, the thermoplastic polyester elastomer (A) may have a Shore hardness of 30 D to 50 D, preferably 35 D to 47 D, more preferably 35 D to 40 D. Within this range, the flexibility and mechanical strength of the composition may be excellent.

In the present disclosure, unless otherwise specified, Shore hardness may be measured according to the method specified in ISO 868 (Type D).

## B) Glycidyl group-modified olefin-based rubber polymer including 10 to 17 % by weight of glycidyl (meth)acrylate

The glycidyl group-modified olefin-based rubber polymer (B) increases melt viscosity and melt tension and serves to extend a chain, i.e., to increase molecular weight, during extrusion.

For example, based on 100 parts by weight of the thermoplastic polyester elastomer (A), the glycidyl group-modified olefin-based rubber polymer (B) may be included in an amount of 0.5 to 2.5 parts by weight, preferably 0.8 to 2.1 parts by weight, more preferably 0.8 to 1.5 parts by weight, still more preferably 0.9 to 1.3 parts by weight. Within this range, hardness, mechanical properties, and fluidity may be excellent.

For example, based on a total weight thereof, the glycidyl group-modified olefin-based rubber polymer (B) may include 10 to 17 % by weight, preferably 11 to 15 % by weight of glycidyl (meth)acrylate. Within this range, by increasing melt viscosity and melt tension, moldability may be excellent, and heat aging resistance and grease resistance may be further improved.

For example, the (meth)acrylate may be an acrylate, methacrylate, or a mixture thereof.

The glycidyl group-modified olefin-based rubber polymer (B) may be preferably a polymer prepared by grafting glycidyl (meth)acrylate onto a polyolefin-based rubber copolymer. In this case, impact resistance may be excellent, and heat aging resistance and grease resistance may be further improved.

For example, the polyolefin-based rubber polymer may be rubber obtained by copolymerizing two or more olefins, preferably rubber obtained by polymerizing ethylene and an α-olefin having 3 to 12 carbon atoms, more preferably rubber obtained by polymerizing ethylene and an α-olefin having 4 to 8 carbon atoms. In this case, melt viscosity and melt tension may be increased.

For example, the α-olefin may include one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbonadiene, ethylidene norbornene, phenyl norbornene, vinyl norbornene, dicyclopentadiene, 1,4-butadiene, 1,5-pentadiene, 1,6-hexadiene, styrene, α-methylstyrene, divinylbenzene, and 3-chloromethylstyrene.

The polyolefin-based rubber polymer may include preferably one or more selected from the group consisting of ethylene-1-butene rubber, ethylene-butylene rubber, ethylene-1-pentene rubber, ethylene-1-hexene rubber, ethylene-1-heptene rubber, ethylene-1-octene rubber, and ethylene-4-methyl-1-pentene rubber, still more preferably ethylene-1-octene rubber (EOR). In this case, fluidity, heat aging resistance, and grease resistance may be excellent.

More preferably, the glycidyl group-modified olefin-based rubber polymer (B) may be prepared by grafting glycidyl (meth)acrylate onto ethylene-octene rubber. In this case, impact resistance, heat aging resistance, and grease resistance may be excellent.

For example, the glycidyl group-modified olefin-based rubber polymer (B) may have a melt flow rate of 0.1 to 5 g/10 min, preferably 0.1 to 3 g/10 min as measured at 190 °C under a load of 2.16 kg according to ASTM D1238. Within this range, melt viscosity and melt tension may be increased.

## C) Carbodiimide-based compound

For example, based on 100 parts by weight of the thermoplastic polyester elastomer (A), the carbodiimide-based compound (C) may be included in an amount of 0.67 to 1.45 parts by weight, preferably 0.8 to 1.4 parts by weight, more preferably 0.9 to 1.4 parts by weight, still more preferably 1.1 to 1.4 parts by weight. Within this range, mechanical properties, fluidity, heat aging resistance, and grease resistance may be excellent.

For example, the carbodiimide-based compound (C) may have a weight average molecular weight of 1,000 to 5,000 g/mol, preferably 1,500 to 4,500 g/mol, more preferably 2,000 to 3,000 g/mol. Within this range, mechanical properties may be further improved.

In the present disclosure, unless otherwise defined, weight average molecular weight may be measured using gel permeation chromatography (GPC, Waters Breeze). As a specific example, weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, weight average molecular weight may be measured under conditions of solvent: THF, column temperature: 40 °C, flow rate: 0.3 ml/min, sample concentration: 20 mg/ml, injection amount: 5 μl, column model: 1× PLgel 10 μm MiniMix-B (250 × 4.6 mm) + 1× PLgel 10 μm MiniMix-B (250 × 4.6 mm) + 1× PLgel 10 μm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI) : OECD TG 118.

For example, the carbodiimide-based compound (C) may be an aromatic carbodiimide compound, an aliphatic carbodiimide compound, or a mixture thereof, preferably an aliphatic carbodiimide compound. In this case, mechanical properties, heat aging resistance, and grease resistance may be excellent.

A carbodiimide compound in which a carbodiimide group is directly bonded to an aromatic ring may be used as the aromatic carbodiimide compound without particular limitation. For example, the aromatic carbodiimide compound may be an aromatic monocarbodiimide compound, an aromatic polycarbodiimide, or a mixture thereof.

For example, the aromatic monocarbodiimide compound may be a compound represented by Chemical Formula 1 below.

[Chemical Formula 1] $\mathbf{R_1\text{-}N{=}C{=}N\text{-}R_2}$

In Chemical Formula 1, $R_1$ and $R_2$ each independently represent an aromatic group.

The aromatic monocarbodiimide may include preferably one or more selected from the group consisting of diphenylcarbodiimide, bis(methylphenyl)carbodiimide, bis(methoxyphenyl)carbodiimide, bis(nitrophenyl)carbodiimide, bis(dimethylphenyl)carbodiimide, bis(diisopropylphenyl)carbodiimide, bis(di-t-butylphenyl)carbodiimide, and bis(triphenylsilyl)carbodiimide.

For example, the aromatic polycarbodiimide compound may be a compound represented by Chemical Formula 2 below.

[Chemical Formula 2]

$$-\!\!\left[ N{=}C{=}N\text{-}R_3 \right]_n\!\!-$$

In Chemical Formula 2, n is an integer of 2 or greater, and $R_3$ represents an aromatic group.

In Chemical Formula 2, n may be preferably an integer from 2 to 300, and the aromatic group may include preferably one or more selected from the group consisting of benzene, diphenylmethane, phenylene, toluene, xylene, and naphthalene.

For example, the aromatic polycarbodiimide may be polymerized by condensing an organic diisocyanate through decarboxylation using an organophosphorus compound or organometallic compound as a catalyst.

For example, the organic diisocyanate for preparation of the aromatic polycarbodiimide may include one or more selected from the group consisting of 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 3,3',5,5'-tetraisopropylbiphenyl-4,4'-diisocyanate, and 1,3,5-triisopropylbenzene-2,4-diisocyanate, preferably 1,3,5-triisopropylbenzene-2,4-diisocyanate.

The aliphatic carbodiimide compound is preferably a polycarbodiimide having two or more carbodiimide groups, wherein the carbodiimide groups are bonded to carbon atoms other than aromatic rings.

For example, the aliphatic polycarbodiimide may be polymerized by condensing an organic diisocyanate through decarboxylation using an organophosphorus compound or organometallic compound as a catalyst.

For example, the diisocyanate for preparation of the aliphatic polycarbodiimide may include one or more selected from the group consisting of hexamethylene diisocyanate, cyclohexane-1,4-diisocyanate, isophorone diisocyanate, 4,4'-dicyclohexylmethane diisocyanate, methylcyclohexane diisocyanate, 1,3-bis(isocyanatomethyl)cyclohexane, xylylene diisocyanate, and tetramethyl xylylene diisocyanate, preferably 4,4'-dicyclohexylmethane diisocyanate.

The aliphatic carbodiimide compound is preferably an aliphatic carbodiimide compound having an terminal group capped with isocyanate, more preferably poly(4,4-dicyclohexylmethanecarbodiimide) having an terminal group capped with isocyanate. In this case, a synergistic effect with the glycidyl group-modified olefin-based rubber polymer (B) may be increased, thereby further improving heat aging resistance and grease resistance.

For example, the aliphatic carbodiimide compound having an terminal group capped with isocyanate may have a carbodiimide group equivalent of 220 to 330 g/mol, preferably 240 to 300 g/mol, more preferably 250 to 280 g/mol, still more preferably 255 to 270 g/mol. Within this range, heat aging resistance and grease resistance may be further improved.

In the present disclosure, the carbodiimide group equivalent refers to a number expressed as [Molecular weight of carbodiimide-based compound]/[Number of carbodiimide groups in molecule of carbodiimide-based compound]. The number of carbodiimide groups may be measured by $^{13}C$-NMR, IR, titration, or the like. In $^{13}C$-NMR, peaks at 130 to 142 ppm are observed. In IR, peaks at 2,130 to 2,140 $cm^{-1}$ are observed. As a specific example of $^{13}C$-NMR measurement, 0.35 g of a sample is dissolved in 2.0 ml of hexachlorobutadiene by heating. After filtering the solution through a glass filter (G2), 0.5 ml of deuterated benzene is added thereto, and the solution is put into an NMR tube having an inner diameter of 10 mm. Then, $^{13}C$-NMR measurement is performed at 120 °C using an NMR measuring device. At this time, the number of integrations is set to 10,000 or more. As a specific example of IR measurement, a sheet is prepared by heat-pressing a sample at 250 °C for 3 minutes. Then, the infrared absorption spectrum of the sheet is measured by a transmission method using an infrared spectrophotometer. At this time, resolution is set to 2 $cm^{-1}$, and the number of integrations is set to 32 times.

For example, the aliphatic carbodiimide compound having an terminal group capped with isocyanate may have a softening point of 50 °C or higher, preferably 65 °C or higher. Within this range, heat aging resistance and grease resistance may be further improved.

In the present disclosure, the softening point may be measured according to ASTM D1525.

For example, in the aliphatic carbodiimide compound having an terminal group capped with isocyanate, the number of carbodiimide groups per one molecule may be 10 or more, preferably 10 to 15. Within this range, heat aging resistance and grease resistance may be further improved.

According to the present invention, by combination of the glycidyl group-modified olefin-based rubber polymer (B) containing a predetermined amount of glycidyl (meth)acrylate and the carbodiimide-based compound (C), hardness and other mechanical properties may be excellent, and a synergistic effect of increasing heat aging resistance and grease resistance may be achieved, thereby satisfying weight reduction, miniaturization, and aesthetics required in the automotive and electrical/electronic fields. The glycidyl (meth)acrylate contained in the glycidyl group-modified olefin-based rubber polymer (B) reacts with the terminal groups of the thermoplastic polyester elastomer (A) to increase molecular weight and grease resistance. Accordingly, it is advantageous that glycidyl (meth)acrylate is contained in a high content. However, in consideration of physical property balance, based on a total weigh of the glycidyl group-modified olefin-based rubber polymer (B), glycidyl (meth)acrylate is preferably contained in an amount of 10 to 17 % by weight.

The carbodiimide-based compound (C) may preferably be included in an amount not less than that of the glycidyl group-modified olefin-based rubber polymer (B). In this case, hardness and other mechanical properties and heat aging resistance may be excellent, and grease resistance may be further improved.

The weight ratio (B:C) of the glycidyl group-modified olefin-based rubber polymer (B) to the carbodiimide-based compound (C) may be preferably 1:1 to 1:1.5, more preferably 1:1.2 to 1:1.4. Within this range, hardness and other mechanical properties and heat aging resistance may be excellent, and grease resistance may be further improved, thereby maximizing a synergistic effect.

**Thermoplastic polyester elastomer composition**

When tensile strength is measured according to ISO 527-1/-2 using specimens (thickness: 2 mm) before and after aging at 140 °C for 336 hours, the thermoplastic polyester elastomer composition may have a heat aging resistance-related tensile strength retention rate of preferably 87 % or more, more preferably 89 % or more, still more preferably 89 to 100 %, still more preferably 91 to 100 %, still more preferably 91 to 97 % as calculated by Equation 1 below. Within this range, physical property balance may be excellent.

[Equation 1]

Heat aging resistance-related tensile strength retention rate (%) = [Tensile strength after aging/Tensile strength before aging] × 100

In the present invention, aging may be performed by placing a specimen in a 140 °C geer oven with hot air circulation for 336 hours.

When tensile elongation is measured according to ISO 527-1/-2 using specimens (thickness: 2 mm) before and after aging at 140 °C for 336 hours, the thermoplastic polyester elastomer composition may have a tensile elongation retention rate of preferably 74 % or more, more preferably 74 to 125 %, still more preferably 84 to 117 %, still more preferably 89 to 111 %, still more preferably 95 to 111 % as calculated by Equation 2 below. Within this range, physical property balance may be excellent.

[Equation 2]

Heat aging resistance-related tensile elongation retention rate (%) = [Tensile elongation after aging/Tensile elongation before aging] × 100

In the present invention, as the heat aging resistance-related tensile strength retention rate, the heat aging resistance-related tensile elongation retention rate, the grease resistance-related tensile strength retention rate, or the grease resistance-related tensile elongation retention rate approaches 100 %, resistance to heat or grease is increased.

When tensile strength is measured according to ISO 527-1/-2 using specimens (thickness: 2mm) before and after immersion in grease (CASMOLY VX-712, Cals Co.) at 140 °C for 336 hours, the thermoplastic polyester elastomer composition may have a grease resistance-related tensile strength retention rate of preferably 55 % or more, preferably 60 % or more, more preferably 70 % or more, still more preferably 70 to 100 %, still more preferably 75 to 90 % as calculated by Equation 3 below. Within this range, physical property balance may be excellent.

[Equation 3]

$$\text{Grease resistance-related tensile strength retention rate (\%)} = [\text{Tensile strength after immersion in grease}/\text{Tensile strength before immersion in grease}] \times 100$$

When tensile elongation is measured according to ISO 527-1/-2 using specimens (thickness: 2mm) before and after immersion in grease (CASMOLY VX-712, Cals Co.) at 140 °C for 336 hours, the thermoplastic polyester elastomer composition may have a grease resistance-related tensile elongation retention rate of preferably 25 % or more, more preferably 30 % or more, still more preferably 40 % or more, still more preferably 40 to 100 %, still more preferably 40 to 80 % as calculated by Equation 4 below. Within this range, physical property balance may be excellent.

[Equation 4]

$$\text{Grease resistance-related tensile elongation retention rate (\%)} = [\text{Tensile elongation after immersion in grease}/\text{Tensile elongation before immersion in grease}] \times 100$$

The thermoplastic polyester elastomer composition may have a melt flow rate of preferably 5 to 11 g/10 min, more preferably 6 to 10.5 g/10 min, still more preferably 6.5 to 10 g/10 min, still more preferably 7 to 9.5 g/10 min as measured at 230 °C under 10 kg according to preferably ISO 1133. Within this range, moldability and physical property balance may be excellent.

In accordance with ISO 868, when two rectangular specimens having a size of 100 mm × 100 mm × 2T are overlapped and the hardness thereof is measured 15 seconds after contacting the specimens with a hardness meter, the thermoplastic polyester elastomer composition may have a hardness of preferably 43 or more, more preferably 43 to 60, still more preferably 45 to 55. Within this range, mechanical properties and physical property balance may be excellent.

When tensile strength is measured at a cross head speed of 200 mm/min according to ISO 527-1/-2 using a specimen obtained by punch-pressing a specimen having a size of 100 mm × 100 mm × 2T in a dumbbell shape according to ISO 527-2-5A, the thermoplastic polyester elastomer composition may have a tensile strength of preferably 25 MPa or more, more preferably 27 MPa or more, still more preferably 27 to 35 MPa, still more preferably 27 to 32 MPa. Within this range, mechanical properties and physical property balance may be excellent.

When elongation is measured at a cross head speed of 200 mm/min according to ISO 527-1/-2 using a specimen obtained by punch-pressing a specimen having a size of 100 mm × 100 mm × 2T in a dumbbell shape according to ISO 527-2-5A, the thermoplastic polyester elastomer composition may have an elongation of preferably 370 % or more, more preferably 400 % or more, still more preferably 400 to 600 %. Within this range, mechanical properties and physical property balance may be excellent.

In the present disclosure, tensile strength and elongation may be measured at a cross head speed of 200 mm/min using a UTM instrument (Zwick Z050) according to ISO 527-1/- 2.

<u>Additives</u>

The thermoplastic polyester elastomer composition may include a heat stabilizer, a lubricant, or a mixture thereof. In this case, required physical properties may be effectively implemented without deteriorating the intrinsic physical properties of the thermoplastic polyester elastomer composition of the present invention.

For example, based on 100 parts by weight of the thermoplastic polyester elastomer (A), the heat stabilizer may be included in an amount of 0.1 to 2 parts by weight, preferably 0.5 to 1.5 parts by weight. Within this range, by preventing oxidation due to heat during an extrusion process, mechanical properties may be excellent, and heat aging

resistance and grease resistance may be further improved.

For example, the heat stabilizer may include one or more selected from the group consisting of a phosphorus-based heat stabilizer, a sulfur-based heat stabilizer, a hindered phenol-based heat stabilizer, and a diphenylamine-based heat stabilizer, preferably a hindered phenol-based heat stabilizer. In this case, by preventing oxidation due to heat during an extrusion process, mechanical properties may be excellent, and heat aging resistance and grease resistance may be further improved.

For example, the phosphorus-based heat stabilizer may include one or more selected from the group consisting of tris(mixed, mono, and di-nonylphenyl) phosphite, tris(2,3-dit-butylphenyl) phosphite, 4,4'-butylidene bis(3-methyl-6-t-butyl phenyl-di-tridecyl) phosphite, 1,1,3-tris(2-methyl-4-di-tridecyl phosphite-5-t-butylphenyl) butane, bis(2,4-di-t-butylphenyl) pentaerythritol-di-phosphite, tetrakis(2,4-di-t-butylphenyl)-4,4'-biphenylene phosphonate, bis(2,6-di-t-butyl-4-methylphenyl) pentaerythritol-di-phosphite, 2,2'-ethylidene bis(4,6-di-t-butylphenyl)-2-ethylhexyl-phosphite, bis(2,4,6-di-t-butylphenyl) pentaerythritol-di-phosphite, triphenylphosphite, diphenyldecyl phosphite, didecyl phenyl phosphite, tridecyl phosphite, trioctyl phosphite, tridodecyl phosphite, trioctadecylphosphite, tris(nonylphenyl) phosphite, and tridodecyl trithiophosphite.

For example, the sulfur-based heat stabilizer may include one or more selected from the group consisting of dilauryl-3,3'-thiodipropionic acid ester, dimyristyl-3,3'-thiodipropionic acid ester, distearyl-3,3'-thiodipropionic acid ester, laurylstearyl-3,3'-thiodipropionic acid ester, and pentaerythritol tetrakis(3-laurylthio propion ester).

For example, the hindered phenol-based heat stabilizer may include one or more selected from the group consisting of 3,5-di-t-butyl-4-hydroxy-toluene, n-octadecyl-β-(4'-hydroxy-3',5'-di-t-butylphenyl) propion ester, pentaerythritol tetrakis[3-(3,5-di-t-butyl-4-hydroxyphenyl) propion ester], thiodiethylenebis[3-(3,5-di-t-butyl-4-hydroxyphenyl) propion ester], octadecyl-3-(3,5-di-t-butyl-4-hydroxyphenyl) propion ester, tetrakis[methylene-3-(3',5'-dit-butyl-4'-hydroxyphenyl) propion ester]methane, 1,3,5-trimethyl-2,4,6'-tris (3,5-di-t-butyl-4-hydroxybenzyl) benzene, calcium(3,5-di-t-butyl-4-hydroxy-benzyl-monoethyl-phosphate), triethylene glycol-bis[3-(3-t-butyl-5-methyl-4-hydroxyphenyl)propion ester], 3,9-bis[1,1-dimethyl-2-(β-(3-t-butyl-4-hydroxy-5-methylphenyl)propionyloxy)ethyl]-2,4,8,10-tetraoxaspiro[5,5]undecane, bis[3,3-bis(4-hydroxy-3-t-butylphenyl) butyric acid]glycol ester, tocopherol, 2,2'-ethylidene bis(4,6-di-t-butylphenol), N,N'-hexane-1,6-diylbis[3-(3,5-di-t-butyl-4-hydroxyphenyl propionamide)], 1,3,5-bis[2,4-bis(1,1-dimethylethyl)-6-methylphenyl]ethylester phosphorous acid, tetrakis(2,4-di-t-butylphenyl)[1,1-biphenyl]-4,4'-diylbisphosphonate, bis(2,4-di-t-butyl phenyl) pentaerythritol diphosphite, N,N'-bis[3-(3,5-di-t-butyl-4-hydroxyphenyl) propionyl]hydrazine, 2,2'-oxamidebis[ethyl-3-(3,5-di-t-butyl-4-hydroxyphenyl) propion ester], 1,1,3-tris(2-methyl-4-hydroxy-5-t-butyl phenyl) butane, 1,3,5-tris(3'5'-di-t-butyl-4'-hydroxybenzyl)-S-triazine-2,4,6(1H,3H,5H)-trione, 1,3,5-tris(4-t-butyl-3-hydroxy-2,6-dimethyl benzyl)isocyanurate, and 3,5-di-t-butyl-4-hydroxyhydrocinnamic acid triester with 1,3,5-tris(2-hydroxy ethyl)-S-triazine-2,4,6(1H,3H,5H).

For example, the diphenylamine-based heat stabilizer may include one or more selected from the group consisting of phenylnaphthylamine, 4,4'-dimethoxy diphenyl amine, 4,4'-bis(α,α-dimethylbenzyl) diphenyl amine, and 4-isopropoxy diphenyl amine, preferably 4,4'-bis(α,α-dimethylbenzyl) diphenyl amine.

For example, based on 100 parts by weight of the thermoplastic polyester elastomer (A), the lubricant may be included in an amount of 0.1 to 2 parts by weight, preferably 0.3 to 1.5 parts by weight, more preferably 0.3 to 1 part by weight. Within this range, surface defects may be reduced by increasing compatibility with an elastomer, and mechanical properties may be excellent.

For example, the lubricant may include one or more selected from the group consisting of a fatty acid amide-based compound, montan-based wax, and olefin-based wax, preferably montan-based wax. In this case, by increasing compatibility with an elastomer, surface defects may be reduced.

For example, the fatty acid amide-based compound may include one or more selected from the group consisting of stearamide, behenamide, ethylene bis(stearamide), N,N'-ethylene bis(12-hydroxy stearamide), erucamide, oleamide, and ethylene bis oleamide.

For example, the montan-based wax may be montan wax, montan ester wax, or a mixture thereof.

For example, the montan ester wax may include one or more selected from wax obtained by esterifying montan-based wax with ethylene glycol and montanic acid, wax esterified with glycerin and montanic acid, calcium montanate containing montanic acid ester, and ester-mixed wax based on montanic acid.

For example, the olefin-based wax may be polyethylene wax, polypropylene wax, or a mixture thereof.

For example, the thermoplastic polyester elastomer composition may further include one or more additives selected from the group consisting of a flame retardant, a UV absorber, an antistatic agent, an antibacterial agent, a processing aid, an anti-friction agent, an anti-wear agent, a metal deactivator, and a coupling agent. In this case, based on 100 parts by weight of the thermoplastic polyester elastomer (A), each of the additives may be included in an amount of 0.01 to 5 parts by weight, preferably 0.05 to 3 parts by weight, more preferably 0.1 to 2 parts by weight, still more preferably 0.2 to 1.5 parts by weight. Within this range, required physical properties may be effectively implemented without deteriorating the intrinsic physical properties of the thermoplastic polyester elastomer composition of the present invention.

## Method of preparing thermoplastic polyester elastomer composition

A method of preparing a thermoplastic polyester elastomer composition may include a step of kneading and extruding 100 parts by weight of a thermoplastic polyester elastomer (A), 0.5 to 2.5 parts by weight of a glycidyl group-modified olefin-based rubber polymer (B) containing 10 to 17 % by weight of glycidyl (meth)acrylate, and 0.67 to 1.45 parts by weight of a carbodiimide-based compound (C) at 170 to 300 °C and 100 to 400 rpm. In this case, fluidity, hardness, tensile strength, tensile elongation, heat aging resistance, and grease resistance may be excellent, and weight reduction, miniaturization, and aesthetics required in the automotive and electrical/electronic fields may be satisfied.

For example, the kneading and extrusion may be performed using a single-screw extruder, a twin-screw extruder, or a Banbury mixer. In this case, the composition may be uniformly dispersed, and thus compatibility may be excellent.

For example, the kneading and extrusion may be performed at a barrel temperature of 170 to 300 °C, preferably 200 to 250 °C, more preferably 210 to 240 °C. In this case, a throughput per unit time may be appropriate, melt-kneading may be sufficiently performed, and thermal decomposition of the components may be prevented.

For example, the kneading and extrusion may be performed at a screw rotation rate of 100 to 400 rpm, preferably 150 to 350 rpm, more preferably 200 to 300 rpm, still more preferably 230 to 270 rpm. In this case, a throughput per unit time may be appropriate, and process efficiency and the physical properties of the composition may be excellent.

The thermoplastic polyester elastomer composition obtained through the extrusion may be made into pellets using a pelletizer when necessary.

In addition, molded articles used in various industrial fields may be manufactured using the composition through a molding process such as a blow process and an injection process.

The method of preparing a thermoplastic polyester elastomer composition includes the description of the above-described thermoplastic polyester elastomer composition, and thus repeated description thereof is omitted.

## Molded article

A molded article of the present invention includes the thermoplastic polyester elastomer composition of the present invention. In this case, fluidity, hardness, tensile strength, tensile elongation, heat aging resistance, and grease resistance may be excellent, and weight reduction, miniaturization, and aesthetics required in the automotive and electrical/electronic fields may be satisfied.

For example, the molded article may be an automotive part or an electrical/electronic part, preferably a car engine cover, an undercover, an airbag, a hole plug, a wire, a CVJ boot, an air duct, or a bump stopper.

A method of manufacturing a molded article may preferably include a step of kneading and extruding 100 parts by weight of a thermoplastic polyester elastomer (A), 0.5 to 2.5 parts by weight of a glycidyl group-modified olefin-based rubber polymer (B) containing 10 to 17 % by weight of glycidyl (meth)acrylate, and 0.67 to 1.45 parts by weight of a carbodiimide-based compound (C) at 170 to 300 °C and 100 to 400 rpm to prepare pellets; and a step of molding the prepared pellets using a molding machine. In this case, a molded article having excellent fluidity, hardness, tensile strength, tensile elongation, heat aging resistance, and grease resistance may be provided.

The method of manufacturing a molded article includes the description of the above-described thermoplastic polyester elastomer composition, and thus repeated description thereof is omitted.

In describing the thermoplastic polyester elastomer composition, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Materials used in the following examples and comparative Examples are as follows.

* A) TPEE: KEYFLEX BT2140D (LG Chemical Co.) having a melt flow rate (230 °C, 2.16 kg) of 5 g/10 min and a Shore D hardness of 40 D
* B-1) Glycidyl group-modified olefin-based rubber polymer: Glycidyl methacrylate-grafted ethylene-octene rubber (EOR-GMA, glycidyl methacrylate content: 11 to 15 wt%)
* B-2) Glycidyl group-modified olefin-based rubber polymer: Ethylene-methyl acrylate-glycidyl methacrylate terpolymer (LOTARDER® AX8900 manufactured by SK Geo Centric Co., glycidyl methacrylate content: 8 wt%)
* B-3) Glycidyl group-modified olefin-based rubber polymer: Ethylene-butyl acrylate-glycidyl methacrylate polymer (GRAFTABOND EB-GMA manufactured by GRAFT POLYMER Co., glycidyl methacrylate content: 20 wt%)
* C) Carbodiimide-based compound: Poly(4,4-dicyclohexylmethanecarbodiimide) having an end group capped with isocyanate (Carbodilite HMV-15CA manufactured by Nisshinbo Chemical Co., carbodiimide group equivalent: 262 g/mol, number average molecular weight: 3,050 g/mol, the number of carbodiimide groups per molecule: 12)
* D) Hindered phenol-based heat stabilizer: IR-1010 (BASF Co.)
* E) Montan-based wax: OP-Wax (Clariant Co.)

Examples 1 to 5 and Comparative Examples 1 to 8

According to the contents shown in Tables 1 and 2 below, the components shown in Tables 1 and 2 below were kneaded and extruded at an extrusion temperature of 230 °C and a screw speed of 250 rpm using a twin-screw extruder to prepare pellets. Melt flow rate was measured using the prepared pellets. In addition, the prepared pellets were injected at an injection temperature of 230 °C, a mold temperature of 40 °C, and an injection speed of 20 mm/min using an injection machine (ENGEL 80 MT) to prepare an injection specimen, and physical properties were measured using the specimen.

[Test Examples]

The properties of the specimens prepared in Examples 1 to 5 and Comparative Examples 1 to 8 were measured in the following methods, and the results are shown in Tables 1 and 2 below.

Measurement methods

* Melt flow rate (MFR) : Melt flow rate was measured at 230 °C under 10 kg for 10 minutes according to ISO 1133. Here, the unit of melt flow rate is g/10 min.
* Hardness (Shore D) : According to ISO 868, two rectangular specimens having a size of 100 mm × 100 mm × 2T were overlapped and the hardness thereof was measured 15 seconds after contacting the specimens with a hardness meter.
* Tensile strength (MPa) and elongation (%) : The tensile strength and elongation of a punched specimen were measured at a cross head speed of 200 mm/min using a UTM instrument (Zwick Z050) according to ISO 527-1/-2. Here, the punched specimen was obtained by punch-pressing a specimen having a size of 100 mm × 100 mm × 2T in a dumbbell shape according to ISO 527-2-5A.
* Heat aging resistance-related tensile strength retention rate (%) and heat aging resistance-related tensile elongation retention rate (%): The tensile strength and tensile elongation of a specimen (thickness: 2mm) aged at 140 °C for 336 hours and a unaged specimen (thickness: 2mm) were measured according to ISO 527-1/-2, and the heat aging resistance-related tensile strength retention rate and heat aging resistance-related tensile elongation retention rate thereof were calculated by Equations 1 and 2 below.

[Equation 1]

Heat aging resistance-related tensile strength retention rate (%) = [Tensile strength after aging/Tensile strength before aging] × 100

[Equation 2]

Heat aging resistance-related tensile elongation retention rate (%) = [Tensile elongation after aging/Tensile elongation before aging] × 100

* Grease resistance-related tensile strength retention rate (%) and grease resistance-related tensile elongation retention rate (%): The tensile strength and tensile elongation of a specimen (thickness: 2mm) immersed in grease (CASMOLY VX-712, Cals Co.) at 140 °C for 336 hours and a non-immersed specimen (thickness: 2mm) were measured according to ISO 527-1/-2, and the grease resistance-related tensile strength retention rate and grease resistance-related tensile elongation retention rate thereof were calculated by Equations 3 and 4 below.

[Equation 3]

Grease resistance-related tensile strength retention rate (%) = [Tensile strength after immersion in grease/Tensile strength before immersion in grease] × 100

[Equation 4]

Grease resistance-related tensile elongation retention rate (%) = [Tensile elongation after immersion in grease/Tensile elongation before immersion in grease] × 100

[Table 1]

| Classification (parts by weight) | Example 1 | Example 2 | Example 3 | Example 4 | Example 5 |
|---|---|---|---|---|---|
| A) TPEE | 100 | 100 | 100 | 100 | 100 |
| B-1) EOR-GMA | 1.03 | 2.09 | 1.04 | 1 | 1 |
| B-2) LOTARDER® AX8900 | | | | | |
| B-3) GRAFTABOND EB-GMA | | | | | |
| C) Carbodiimide-based compound | 0.7 | 0.84 | 1.35 | 1 | 1.2 |
| D) Heat stabilizer | 1.03 | 1.04 | 1.04 | 1.04 | 1.04 |
| E) Lubricant | 0.52 | 0.52 | 0.52 | 0.52 | 0.52 |
| Physical properties | | | | | |
| Hardness (Shore-D) | 45.0 | 45.0 | 45.0 | 45.0 | 45.0 |
| MFR (g/10 min) | 10.0 | 7.0 | 7.0 | 9.0 | 8.0 |

(continued)

| Physical properties | | | | | |
|---|---|---|---|---|---|
| Tensile strength (MPa) | 26.0 | 27.0 | 28.0 | 28.0 | 28.0 |
| Elongation (%) | > 400 | > 400 | > 400 | > 400 | > 400 |
| Heat aging resistance-related tensile strength retention rate (%) | 94.1 | 89.9 | 91.1 | 89.5 | 87.3 |
| Heat aging resistance-related tensile elongation retention rate (%) | 115.2 | 109.5 | 110.1 | 108.1 | 107.3 |
| Grease resistance-related tensile strength retention rate (%) | 59.8 | 62.1 | 80.3 | 64.2 | 75.5 |
| Grease resistance-related tensile elongation retention rate (%) | 29.1 | 30.1 | 50.6 | 31.2 | 43.1 |

[Table 2]

| Classif ication (parts by weight) | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 |
|---|---|---|---|---|---|---|---|---|
| A) TPEE | 100 | 100 | 100 | 100 | 100 | 100 | 100 | 100 |
| B-1) EOR-GMA | 3.14 | 0 | 1.04 | 1.03 | 0.1 | 3 | | |
| B-2) LOTARDE R® AX8900 | | | | | | | 1.04 | |
| B-3) GRAFTAB OND EB-GMA | | | | | | | | 1.04 |
| C) Carbodi imide-based compoun d | 0 | 1.55 | 1.56 | 0.62 | 1 | 1 | 1.35 | 1.35 |
| D) Heat stabili zer | 1.05 | 1.03 | 1.04 | 1.03 | 1.04 | 1.04 | 1.04 | 1.04 |
| E) Lubrica nt | 0.52 | 0.52 | 0.52 | 0.52 | 0.52 | 0.52 | 0.52 | 0.52 |
| Physical properties | | | | | | | | |
| Hardnes s (Shore-D) | 42.0 | 43.0 | - | 45.0 | 43.0 | 43.0 | 45.0 | 45.0 |
| MFR (g/10 min) | 10.0 | 10.0 | - | 15.0 | 12.0 | 5.0 | 12.0 | 17.0 |
| Tensile strengt h (MPa) | 28.0 | 24.0 | - | 27.0 | 24.0 | 27.0 | 28.0 | 27.0 |
| Elongat ion (%) | > 550 | > 350 | - | > 400 | > 400 | > 350 | > 400 | > 450 |
| Heat aging resista nce-related tensile strengt h retenti on rate (%) | 71.6 | 101.8 | - | 90.1 | 60.8 | 67.2 | 85.3 | 76.2 |

(continued)

| Physical properties | | | | | | | | |
|---|---|---|---|---|---|---|---|---|
| Heat aging resista nce-related tensile elongat ion retenti on rate (%) | 88.8 | 138.9 | - | 119.8 | 51.9 | 64.3 | 91.3 | 84.3 |
| Grease resista nce-related tensile strengt h retenti on rate (%) | 43.2 | 63.3 | - | 57.2 | 34.3 | 43.2 | 59.3 | 47.3 |
| Grease resista nce-related tensile elongat ion retenti on rate (%) | 16.3 | 31.9 | - | 28.5 | 19.9 | 38.4 | 30.5 | 25.7 |
| -: Physical properties could not be measured because extrusion was not possible. | | | | | | | | |

As shown in Tables 1 and 2, compared to Comparative Examples 1 to 8 outside the range of the present invention, Examples 1 to 5 according to the present invention have excellent hardness, fluidity, tensile strength, tensile elongation, heat aging resistance, and grease resistance.

In the case of Examples 3 to 5 in which the amount of the carbodiimide-based compound (C) is not less than the amount of the glycidyl group-modified olefin-based rubber polymer (B), grease resistance is further improved.

Specifically, Comparative Example 1 not including the carbodiimide-based compound (C) exhibits low hardness, heat aging resistance, and grease resistance, and Comparative Example 2 not including the glycidyl group-modified olefin-based rubber polymer (B) exhibits low hardness, tensile strength, and elongation.

In addition, in the case of Comparative Example 3 in which the content of the carbodiimide-based compound (C) exceeds the range of the present invention, physical properties could not be measured because extrusion was not possible. In the case of Comparative Example 4 in which the content of the carbodiimide-based compound (C) is less than the range of the present invention, due to high melt flow rate, processability was poor.

In addition, in the case of Comparative Examples 5 and 6 in which the content of the glycidyl group-modified olefin-based rubber polymer (B) is outside the range of the present invention, hardness, heat aging resistance, and grease resistance are low. In addition, in the case of Comparative Example 6, elongation is also low.

In addition, in the case of Comparative Examples 7 and 8 in which the content of glycidyl (meth)acrylate in the glycidyl group-modified olefin-based rubber polymer (B) is outside the range of the present invention, heat aging resistance-related tensile strength retention rate is low, and processability is poor due to high melt flow rate. In the case of Comparative Example 8, grease resistance-related tensile strength retention rate is also low.

In conclusion, it can be confirmed that the thermoplastic polyester elastomer composition according to the present invention including the thermoplastic polyester elastomer (A), the glycidyl group-modified olefin-based rubber polymer (B) containing a predetermined amount of glycidyl (meth)acrylate, and the carbodiimide-based compound (C) in a predetermined content ratio has excellent fluidity, hardness, tensile strength, tensile elongation, heat aging resistance, and grease resistance and satisfies weight reduction, miniaturization, and aesthetics required in the automotive and electrical/electronic fields.

## Claims

1. A thermoplastic polyester elastomer composition, comprising:

   100 parts by weight of a thermoplastic polyester elastomer (A);
   0.5 to 2.5 parts by weight of a glycidyl group-modified olefin-based rubber polymer (B) containing 10 to 17 % by weight of glycidyl (meth)acrylate; and
   0.67 to 1.45 parts by weight of a carbodiimide-based compound (C).

2. The thermoplastic polyester elastomer composition according to claim 1, wherein, when tensile strength and tensile elongation are measured according to ISO 527 using specimens (thickness: 2 mm) before and after aging at 140 °C for 336 hours, the thermoplastic polyester elastomer composition has a heat aging resistance-related tensile strength retention rate of 87 % or more as calculated by Equation 1 below and a heat aging resistance-related tensile elongation retention rate of 74 % or more as calculated by Equation 2 below:

[Equation 1]

Heat aging resistance-related tensile strength retention rate (%) = [Tensile strength after aging/Tensile strength before aging] × 100

[Equation 2]

Heat aging resistance-related tensile elongation retention rate (%) = [Tensile elongation after aging/Tensile elongation before aging] × 100

3. The thermoplastic polyester elastomer composition according to claim 1, wherein, when tensile strength and tensile elongation are measured according to ISO 527 using specimens (thickness: 2mm) before and after immersion in grease (CASMOLY VX-712, Cals Co.) at 140 °C for 336 hours, the thermoplastic polyester elastomer composition has a grease resistance-related tensile strength retention rate of 55 % or more as calculated by Equation 3 below and a grease resistance-related tensile elongation retention rate of 25 % or more as calculated by Equation 4 below:

[Equation 3]

Grease resistance-related tensile strength retention rate (%) = [Tensile strength after immersion in grease/Tensile strength before immersion in grease] × 100

[Equation 4]

Grease resistance-related tensile elongation retention rate (%) = [Tensile elongation after immersion in grease/Tensile elongation before immersion in grease] × 100

4. The thermoplastic polyester elastomer composition according to claim 1, wherein the glycidyl group-modified olefin-based rubber polymer (B) is obtained by grafting glycidyl (meth)acrylate onto a polyolefin-based rubber copolymer.

5. The thermoplastic polyester elastomer composition according to claim 1, wherein the carbodiimide-based compound (C) is an aromatic carbodiimide compound, an aliphatic carbodiimide compound, or a mixture thereof.

6. The thermoplastic polyester elastomer composition according to claim 1, wherein the thermoplastic polyester elastomer (A) has a melt flow rate of 0.5 to 10 g/10 min as measured at 230 °C under a load of 2.16 kg according to ASTM D1238.

7. The thermoplastic polyester elastomer composition according to claim 1, wherein the thermoplastic polyester elastomer (A) comprises an aromatic dicarboxylic acid or an ester derivative thereof; an aliphatic diol; and a polyalkylene oxide.

8. The thermoplastic polyester elastomer composition according to claim 7, wherein the aromatic dicarboxylic acid comprises one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

9. The thermoplastic polyester elastomer composition according to claim 7, wherein the aliphatic diol comprises one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.

10. The thermoplastic polyester elastomer composition according to claim 7, wherein the polyalkylene oxide comprises one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.

11. The thermoplastic polyester elastomer composition according to claim 1, wherein the thermoplastic polyester elastomer composition comprises a heat stabilizer, a lubricant, or a mixture thereof.

12. A method of preparing a thermoplastic polyester elastomer composition, comprising kneading and extruding 100 parts by weight of a thermoplastic polyester elastomer (A), 0.5 to 2.5 parts by weight of a glycidyl group-modified olefin-based rubber polymer (B) containing 10 to 17 % by weight of glycidyl (meth)acrylate, and 0.67 to 1.45 parts by weight of a carbodiimide-based compound (C) at 170 to 300 °C and 100 to 400 rpm.

13. A molded article, comprising the thermoplastic polyester elastomer composition according to any one of claims 1 to 11.

14. The molded article according to claim 13, wherein the molded article is an automotive part or an electric/electronic part.

## INTERNATIONAL SEARCH REPORT

International application No.
**PCT/KR2022/021067**

**A. CLASSIFICATION OF SUBJECT MATTER**

**C08L 67/02**(2006.01)i; **C08L 51/04**(2006.01)i; **C08K 5/29**(2006.01)i

According to International Patent Classification (IPC) or to both national classification and IPC

**B. FIELDS SEARCHED**

Minimum documentation searched (classification system followed by classification symbols)

C08L 67/02(2006.01); B29B 11/10(2006.01); C08K 3/32(2006.01); C08K 5/521(2006.01); C08L 51/00(2006.01); C08L 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성 폴리에스테르 엘라스토머(thermoplastic polyester elastomer), 글리시딜기 변성 올레핀계 고무 중합체(glycidyl group-modified olefinic rubber polymer), 카보디이미드계 화합물(carbodiimide compound)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0035777 A (LG CHEM, LTD.) 22 March 2022 (2022-03-22)<br>See claims 1-15; and paragraphs [0040]-[0165]. | 1-14 |
| Y | KR 10-2020-0047921 A (SAMYANG CORPORATION) 08 May 2020 (2020-05-08)<br>See claims 1-6; and paragraph [0029]. | 1-14 |
| A | KR 10-0553864 B1 (ADVANCED ELASTOMER SYSTEMS, L.P.) 24 February 2006 (2006-02-24)<br>See entire document. | 1-14 |
| A | WO 89-11507 A1 (ALLIED-SIGNAL INC.) 30 November 1989 (1989-11-30)<br>See entire document. | 1-14 |
| A | KR 10-2018-0104280 A (TORAY INDUSTRIES, INC.) 20 September 2018 (2018-09-20)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2023** | **29 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/021067**

| Patent document cited in search report | Publication date (day/month/year) | Patent family member(s) | Publication date (day/month/year) |
|---|---|---|---|
| KR 10-2022-0035777 A | 22 March 2022 | None | |
| KR 10-2020-0047921 A | 08 May 2020 | KR 10-2247363 B1 | 04 May 2021 |
| KR 10-0553864 B1 | 24 February 2006 | CN 1281484 A | 24 January 2001 |
| | | CN 1281484 C | 24 January 2001 |
| | | EP 1037944 A1 | 27 September 2000 |
| | | EP 1037944 B1 | 03 December 2003 |
| | | EP 1101797 A1 | 23 May 2001 |
| | | EP 1101797 B1 | 05 January 2005 |
| | | JP 2001-164049 A | 19 June 2001 |
| | | JP 2001-525475 A | 11 December 2001 |
| | | JP 4295917 B2 | 15 July 2009 |
| | | JP 4841720 B2 | 21 December 2011 |
| | | KR 10-0688290 B1 | 28 February 2007 |
| | | KR 10-2001-0032931 A | 25 April 2001 |
| | | KR 10-2001-0049711 A | 15 June 2001 |
| | | US 6020427 A | 01 February 2000 |
| | | US 6207752 B1 | 27 March 2001 |
| | | WO 99-29773 A1 | 17 June 1999 |
| WO 89-11507 A1 | 30 November 1989 | KR 10-1990-0701930 A | 05 December 1990 |
| KR 10-2018-0104280 A | 20 September 2018 | CN 108137909 A | 08 June 2018 |
| | | CN 108137909 B | 29 March 2019 |
| | | EP 3412724 A1 | 12 December 2018 |
| | | EP 3412724 A4 | 25 September 2019 |
| | | EP 3412724 B1 | 13 May 2020 |
| | | JP 2018-039970 A | 15 March 2018 |
| | | JP 6264502 B2 | 24 January 2018 |
| | | JP 6822163 B2 | 27 January 2021 |
| | | US 10781309 B2 | 22 September 2020 |
| | | US 2019-0055398 A1 | 21 February 2019 |
| | | WO 2017-135055 A1 | 08 February 2018 |
| | | WO 2017-135055 A1 | 10 August 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220062787
- KR 20090062785 A